# EUROPEAN PATENT APPLICATION

(11) **EP 4 645 532 A1**
(43) Date of publication of application: **05.11.2025**
(21) Application number: 24843379.9
(22) Date of filing: 03.07.2024
(51) Int. Cl.: H01M 10/658, H01M 50/342, H01M 50/282, H01M 10/625, H01M 50/211, H01M 50/249, H01M 10/613

(54) **BATTERY MODULE, AND BATTERY PACK AND VEHICLE INCLUDING SAME**

(30) Priority: 14.07.2023 KR 20230091921
(71) Applicant: LG Energy Solution, Ltd., Seoul 07335 (KR)
(72) Inventor: YUN, Hyun-Seop, Daejeon 34122 (KR); KIM, Byung-Kyu, Daejeon 34122 (KR); HAN, Min-Hee, Daejeon 34122 (KR)
(74) Representative: Plasseraud IP
(86) International application number: PCT/KR2024/009429
(87) International publication number: WO 2025/018660

(57) **Abstract**

The present disclosure relates to a battery module including a cell stack including a plurality of battery cells; a module case configured to accommodate the cell stack; and a protective layer disposed on an outer surface of the module case and configured to prevent thermal conduction and thermal radiation to an outside of the module case.

## Description

### TECHNICAL FIELD

The present disclosure relates to a battery module and a battery pack and a vehicle including the same.

The present application claims priority to Korean Patent Application No. 10-2023-0091921 filed on July 14, 2023 in the Republic of Korea, the disclosure of which is incorporated herein by reference.

### BACKGROUND

Due to being easily applicable to different types of products and having electrical properties such as high energy density, secondary batteries are commonly applied to not only portable devices but also electric vehicles (EVs) or hybrid electric vehicles (HEVs) that are powered by a source of electric power. Secondary batteries remarkably reduce the use of fossil fuels, and in addition to the primary advantage, they do not generate by-products from the use of energy. From this perspective, secondary batteries are seen as a new source of energy that is more environmentally friendly and energy-efficient.

The types of secondary batteries being now widely used include lithium ion batteries, lithium polymer batteries, nickel cadmium batteries, nickel hydrogen batteries, nickel zinc batteries and so on. When higher output voltage is required, a plurality of battery cells may be connected in series to form a battery module or a battery pack. Additionally, the battery module or the battery pack may be formed by connecting the plurality of battery cells in parallel to increase the charge/discharge capacity. Accordingly, the number of battery cells included in the battery module or pack may be variously set depending on the required output voltage or charge/discharge capacity.

Meanwhile, because the battery cell involves chemical reaction during charging and discharging, when it is used in a higher environment than the optimal temperature, the performance may degrade, and when thermal control to the optimal temperature fails, fire or explosion may occur unexpectedly. Additionally, the battery module has a structure in which the battery cells are densely packed in a module case. Accordingly, when a thermal event occurs in any one battery cell, high temperature gases and flames may spread to adjacent battery cells, causing a very dangerous situation, for example, explosion propagation.

Additionally, because the module case is made of a metal having higher thermal conductivity, for example, aluminum, when a thermal event occurs in the battery cell, there is a high likelihood of thermal conduction to the outside or inside of the battery module, causing thermal runaway.

Accordingly, there is a need for development of a structure for preventing heat accumulation in the battery module due to high temperature gases or flames produced from the battery module in the event of thermal runaway in the battery module, thereby suppressing and delaying heat propagation in the battery module.

Furthermore, in the battery pack including densely packed battery modules, there is a need for development of a structure for minimizing thermal conduction and thermal radiation to adjacent other battery modules when a thermal event occurs in any battery module, thereby suppressing and delaying heat propagation between battery modules.

### DISCLOSURE

### Technical Problem

The present disclosure is directed to providing a battery module capable of preventing heat accumulation in the battery module due to gases or flames produced from the battery module in the event of thermal runaway in the battery module, thereby effectively preventing or delaying thermal runaway propagation in the battery module.

The present disclosure is further directed to providing a battery module capable of minimizing thermal conduction and thermal radiation to adjacent other battery modules in the event of thermal runaway in the battery module, thereby effectively preventing or delaying thermal runaway propagation between battery modules.

Accordingly, the present disclosure is further directed to providing a battery module with improved safety and reliability.

Additionally, the present disclosure is further directed to providing a battery pack and a vehicle including the battery module.

However, the technical problems to be solved by the present disclosure are not limited to the above-described problems, and these and other problems will be clearly understood by those skilled in the art from the following description.

### Technical Solution

To solve the above-described problem, the present disclosure provides a battery module including a cell stack including a plurality of battery cells; a module case configured to accommodate the cell stack; and a protective layer disposed on an outer surface of the module case and configured to prevent thermal conduction and thermal radiation to an outside of the module case.

The module case may have at least one venting hole in an upper surface, wherein gas from the battery cell may be vented through the venting hole, and the protective layer may be present on the upper surface of the module case and an inner peripheral surface of the venting hole.

The venting hole may include a plurality of venting holes, and the protective layer may be individually present for each of the plurality of venting holes.

The protective layer may be present on all surfaces including the upper surface of the module case.

The protective layer may be made of a material including at least one of polyurethane or silicone.

The protective layer may be a coating layer of UL 94 V-0 or higher rating.

The protective layer may be a foam layer of conformal coating along the outer surface of the module case.

A thickness of the protective layer may be 5% or more or 50% or less of a thickness of the module case.

The battery module may further include a top cover attached to an upper surface of the module case by an adhesive member.

The top cover may be attached to the protective layer by the adhesive member.

The battery module may further include a primer layer disposed between the protective layer and the adhesive member to improve a coupling strength between the module case and the top cover.

The module case may include a U-frame having an open upper surface, an open front surface and an open rear surface, and configured to accommodate the cell stack, and a top plate covering the open upper surface of the U-frame.

Alternatively, the module case may include a mono frame having an open front surface and an open rear surface and configured to accommodate the cell stack.

Additionally, the present disclosure provides a battery pack including the battery module according to the present disclosure.

The battery pack may further include a pack case accommodating the battery module and having a cooling member on a bottom surface, and the protective layer may be present on the two side surfaces and the upper surface of the module case.

Furthermore, the present disclosure provides a vehicle including the battery pack according to the present disclosure.

### Advantageous Effects

According to an aspect of the present disclosure, it may be possible to prevent heat accumulation in the battery module due to gases or flames produced from the battery module in the event of thermal runaway in the battery module, thereby effectively preventing or delaying thermal runaway propagation in the battery module. Accordingly, it may be possible to ensure safety and reliability of the battery module.

Additionally, according to another aspect of the present disclosure, it may be possible to minimize thermal conduction and thermal radiation to adjacent other battery modules in the event of thermal runaway in the battery module, thereby effectively preventing or delaying thermal runaway propagation between battery modules.

Additionally, according to another aspect of the present disclosure, it may be possible to improve the adhesion strength of the adhesive member for adhering the top cover and the battery module when attaching the top cover to the outside of the battery module.

Accordingly, according to another aspect of the present disclosure, it may be possible to prevent or delay events such as fires or explosions caused by thermal runaway in the battery pack including battery modules or the device on which they are mounted.

Besides, the present disclosure may have many other effects, and the effects will be described in each embodiment, or with regard to effects that can be easily inferred by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a full perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure.
FIG. 4 is an enlarged view of section A in FIG. 3.
FIG. 5 is an exploded perspective view of a battery module according to another embodiment of the present disclosure.
FIG. 6 is a cross-sectional view of a battery module according to another embodiment of the present disclosure.
FIG. 7 is an enlarged view of section B in FIG. 6.
FIG. 8 is an exploded perspective view of a battery module according to still another embodiment of the present disclosure.
FIG. 9 is a cross-sectional view of a battery module according to still another embodiment of the present disclosure.
FIG. 10 is a cross-sectional view of a battery module according to still another embodiment of the present disclosure.
FIG. 11 is a schematic perspective view of a battery pack including a battery module according to an embodiment of the present disclosure.
FIG. 12 is a schematic perspective view of a vehicle including a battery pack according to an embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time the application was filed.

Additionally, the present disclosure may include many different embodiments. The description of substantially identical or similar elements in each embodiment is omitted to avoid redundancy, and differences will be described.

The terms indicating directions such as upper, lower, left, right, front and rear are used for convenience of description, but it is obvious to those skilled in the art that the terms may change depending on the position of the stated element or an observer.

For example, in an embodiment of the present disclosure, an X axis direction shown in the drawings may refer to a left-right direction, a Y axis direction may refer to a front-rear direction perpendicular to the X axis direction on the horizontal surface (X-Y plane), and a Z axis direction may refer to a top-bottom direction (a vertical direction) perpendicular to the X axis direction and the Y axis direction.

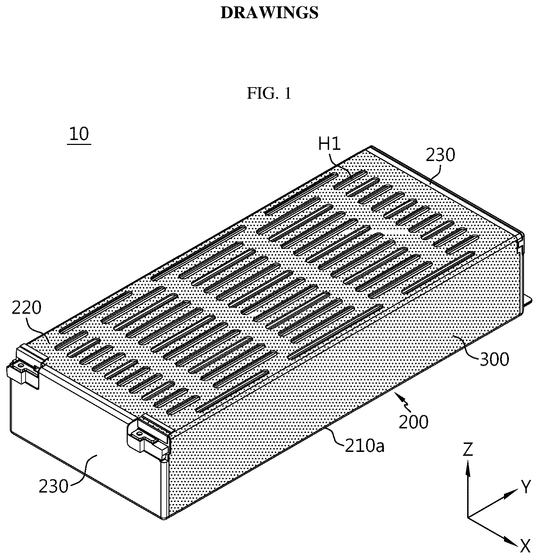

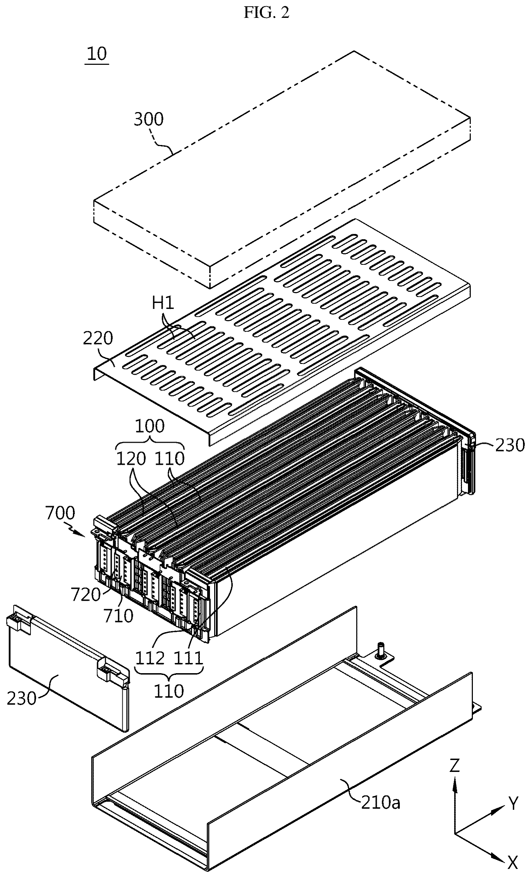

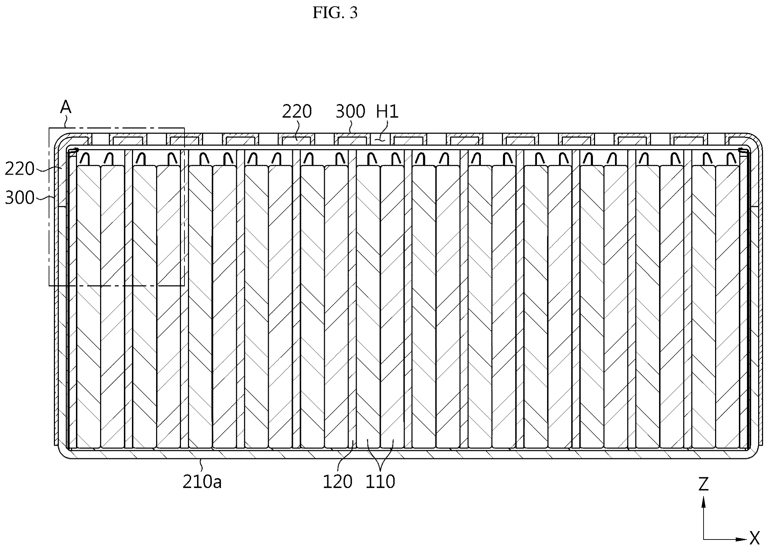

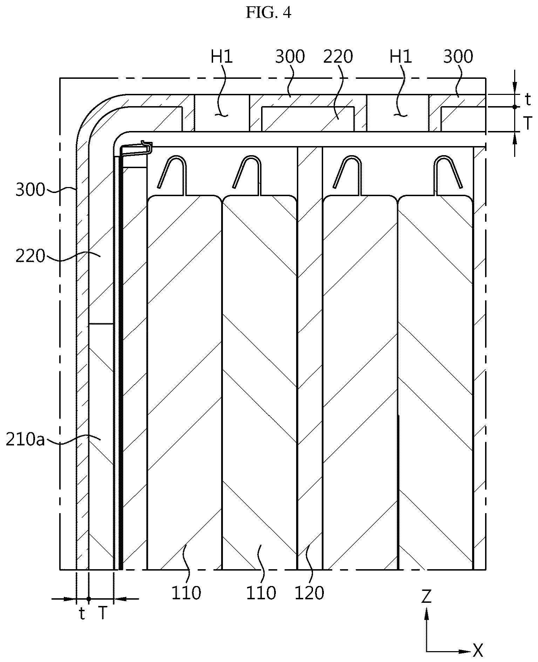

FIG. 1 is a full perspective view of a battery module according to an embodiment of the present disclosure, and FIG. 2 is an exploded perspective view of the battery module according to an embodiment of the present disclosure. Additionally, FIG. 3 is a cross-sectional view of the battery module according to an embodiment of the present disclosure, and FIG. 4 is an enlarged view of section A in FIG. 3.

Referring to FIGs. 1 to 4, the battery module 10 according to an embodiment of the present disclosure includes a cell stack 100, a module case 200 and a protective layer 300.

The cell stack 100 may include a battery cell 110. The battery cell 110 may include a plurality of battery cells.

The plurality of battery cells 110 may be, for example, a pouch-type secondary battery. Each of the plurality of battery cells 110 may have an electrode lead 112. Specifically, the plurality of battery cells 110 may include an electrode assembly, a cell case 111 accommodating the electrode assembly and the electrode lead 112 connected to the electrode assembly, and extended in the outward direction of the cell case 111 to act as an electrode terminal. The cell case 111 may accommodate the electrode assembly in an accommodation portion, and the edge around the accommodation may form a sealing portion by heat welding.

The electrode lead 112 may include a pair of electrode leads, and the pair of electrode leads 112 may be extended from two ends of the battery cell 110, i.e., in the length direction (±Y direction). In this instance, the pair of electrode leads 112 may be a positive electrode lead or a negative electrode lead. If necessary, the battery cell 110 may have the two electrode leads 112 located at only one end in Y axis direction, for example, at the end in +Y axis direction.

As shown in FIG. 2, the plurality of battery cells 110 may be arranged side by side along the left-right direction (X axis direction) in a standing position in the vertical direction (Z axis direction). In this instance, each battery cell 110 may have the sealing portion facing the front-rear direction (Y axis direction) and the top-bottom direction (Z axis direction) and the accommodation portion facing the left-right direction (X axis direction).

The present disclosure is not limited to a particular type or shape of the battery cell 110, and a variety of battery cells 110 known at the time the application was filed may be used to form the cell stack 100 of the present disclosure. In this embodiment, as shown in the drawings, the battery cell 110 is the pouch-type battery cell that has high energy density and is easy to stack, but a cylindrical or prismatic secondary battery may be used as the battery cell 110.

The cell stack 100 may further include a barrier member 120. The barrier member 120 may be disposed between the battery cells 110. In particular, a plurality of barrier members 120 may be included in one cell stack 100. The barrier member 120 may be disposed in every one or more battery cells 110. In this embodiment, the barrier member 120 may be disposed in every two or more battery cells 110. By the above-described exemplary configuration of the present disclosure, because the battery cells 110 are divided or separated through the barrier member 120, it may be possible to prevent gases or flames from spreading to the adjacent other barrier member 120 over the barrier member 120.

The barrier member 120 may be made of a material having high heat resistance and/or fire resistance performance, for example, silicone or aerogel. By the above-described exemplary configuration of the present disclosure, when swelling occurs in the battery cell 110, the barrier member 120 may compress the battery cell 110, thereby contributing to structural stiffness of the battery cells 110.

Meanwhile, referring to FIG. 2, the battery module 10 of the present disclosure may further include a busbar frame assembly 700. The busbar frame assembly 700 may be disposed in the module case 200 and configured to cover at least one side of the cell stack 100. In this embodiment, as shown in FIG. 2, the busbar frame assembly 700 may be coupled to the front side and the rear side of the cell stack 100.

The busbar frame assembly 700 may include a busbar frame 710 and a plurality of busbars 720. The busbar frame 710 may be coupled to approximately the front side and the rear side of the cell stack 100. The busbar frame 710 may have slits through which the electrode leads 112 of the battery cell 110 are extended in +Y or -Y axis direction. Additionally, the busbar frame 710 may be formed from an electrically insulating material, for example, plastics, and may have the outer surface to which the busbar 720 is attached.

Additionally, the busbar frame 710 may be coupled to the front side or the rear side of the cell stack 100 by an interference fit.

Meanwhile, the plurality of busbars 720 is a means for connecting the battery cells 110 in series and/or in parallel, and may be formed from a metal, for example, copper, aluminum, nickel in the shape of a rod. The electrode leads 112 of the battery cells 110 may be extended in the outward direction of the busbar frame 710 through the slits of the busbar frame 710, and the extended parts may be attached to the surface of the busbar 720 by welding. At the front side and the rear side of the cell stack 100, when the electrode leads 112 of each battery cell 110 and the busbars 720 are welded in a predetermined pattern, the battery cells 110 may be connected in series and/or in parallel.

Meanwhile, referring to FIGs. 1 to 4, the battery module 10 according to an embodiment of the present disclosure may include the module case 200. The module case 200 may be configured to accommodate the cell stack 100. Specifically, the module case 200 may have an internal space and be configured to accommodate the cell stack 100 and the busbar frame assembly 700 in the internal space.

Meanwhile, the module case 200 may include a case body 210a or 210b. For example, as shown in FIGs. 1 to 4, the case body 210a or 210b may be a U-frame 210a. The U-frame 210a may cover two side surfaces and the lower surface of the cell stack 100. The U-frame 210a may include a left side plate and a right side plate that cover the two side surfaces of the cell stack 100, and a lower plate that covers the lower surface of the cell stack 100. Additionally, the left side plate, the right side plate and the lower plate may be integrally formed. In this instance, the U-frame 210a may have an open upper surface, an open front surface and an open rear surface. The U-frame 210a may be made of a metal having stiffness and heat resistance to physically or chemically protect the received battery cells 110.

When the case body 210a or 210b is the U-frame 210a, the module case 200 may further include a top plate 220. The top plate 220 may form the upper surface of the U-frame 210a. The top plate 220 may be coupled to the open upper surface of the U-frame 210a. The top plate 220 may be coupled to the U-frame 210a by welding. In this instance, the top plate 220 and the U-frame 210a may be coupled into a rectangular pipe shape having an open front surface and an open rear surface.

Additionally, the case body 210a or 210b may allow the battery cells 110 to be inserted into the case body 210a or 210b along a direction. For example, the battery cells 110 may be inserted into the case body 210a or 210b along the front-rear direction (Y axis direction). When the case body 210a or 210b is the U-frame 210a, the U-frame 210a may be configured to allow the battery cells 110 to be inserted therein by a sliding method.

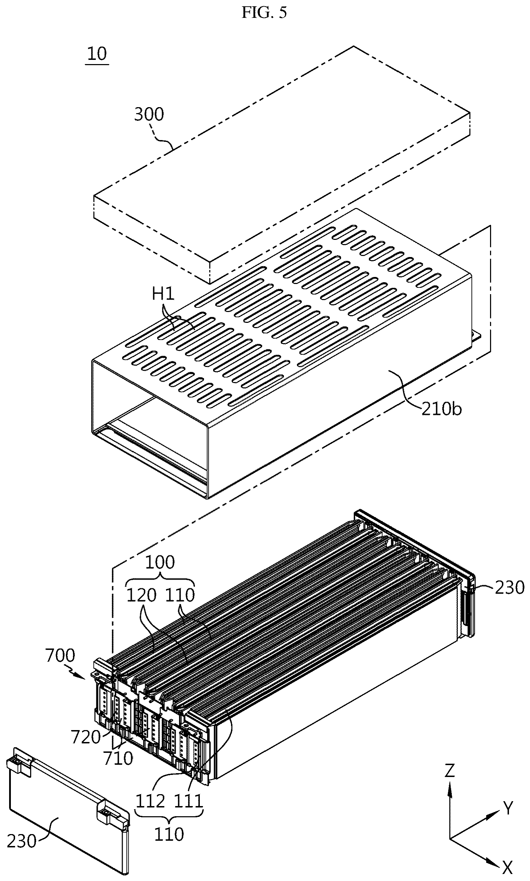

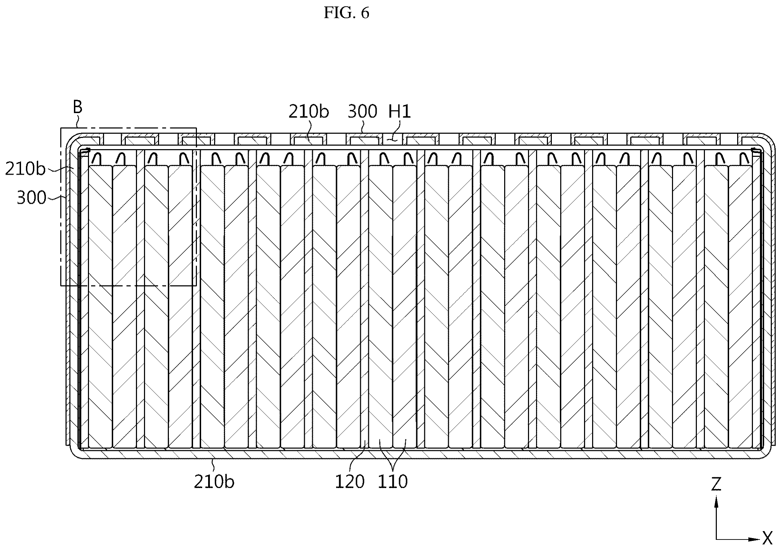

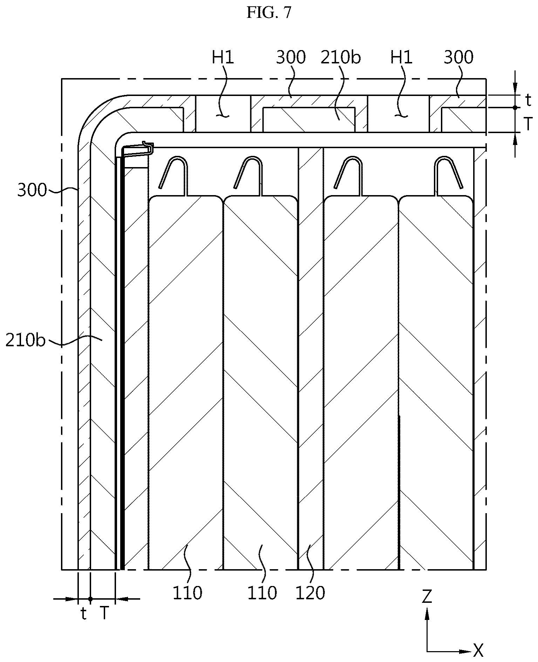

FIG. 5 is an exploded perspective view of a battery module according to another embodiment of the present disclosure, FIG. 6 is a cross-sectional view of the battery module according to another embodiment of the present disclosure, and FIG. 7 is an enlarged view of section B in FIG. 6.

Alternatively, as shown in FIGs. 5 to 7, the case body 210a or 210b may be a mono frame 210b. The mono frame 210b may be formed in a rectangular pipe shape having an upper surface, a lower surface, a left side surface and a right side surface, and having an open front surface and an open rear surface. Additionally, the upper surface, the lower surface, the left side surface and the right side surface may be integrally formed. The mono frame 210b may be made of a metal having stiffness and heat resistance to physically or chemically protect the received battery cells 110.

When the case body 210a or 210b is the mono frame 210b, the cell stack 100 may be assembled with the busbar frame assembly 700 and inserted into the mono frame 210b by an interference fit. In this instance, for the interference fit coupling, there may be almost no gap between the upper surface and the lower surface of the mono frame 210b and between the battery cells 110, and there may be almost no gap between the two side surfaces of the mono frame 210b and the two sides of the battery cells 110.

Besides, the module case 200 may be formed in many different shapes. For example, the module case 200 may include a lower case in the shape of a box having an open upper end and an upper cover that closes the open upper end of the lower case. In this instance, the lower case may be an integrated form of a left side plate and a right side plate that cover two side surfaces of the cell stack 100, and a front plate and a rear plate that cover the front surface and the rear surface of the cell stack 100.

Meanwhile, referring to FIGs. 2 and 5, the module case 200 may include an end plate 230 at the open front surface and the open rear surface of the case body 210a or 210b. The end plate 230 may be coupled to the case body 210a or 210b by welding. Although not shown for convenience, the end plate 230 may be, for example, made of an insulating material on the inner side and a metal material on the outer side. Additionally, the end plate 230 may have a hole or a slit at a certain area for the exposure of the components that need to be exposed, for example, a positive terminal and a negative terminal of the battery module 10 or a connector.

Meanwhile, as shown in FIGs. 1 to 7, the module case 200 may have a venting hole H1. The venting hole H1 may be configured to release venting gases from the battery cell 110 out of the module case 200. The venting hole H1 may be formed on one side of the module case 200 to enable directional venting in a direction. For example, the venting hole H1 may be formed in the upper surface of the module case 200.

For example, as shown in FIGs. 1 to 4, when the case body 210 is the U-frame 210a, the venting hole H1 may be formed in the top plate 220, to enable directional venting in the upward direction of the battery module 10 through the venting hole H1. The venting hole H1 may include a plurality of venting holes, and the plurality of venting holes H1 may be arranged at a regular interval along the horizontal direction (X axis, Y axis direction).

As described above, the venting hole H1 formed in the upper surface of the module case 200 may be configured to release gases or flames produced from the battery module 10 out of the battery module 10 in the event of thermal runaway in the battery module 10. The remaining area of the module case 200 except the venting hole H1 may be covered, and gases or flames may be vented straight towards the venting hole H1.

By the above-described exemplary configuration of the present disclosure, when a thermal event occurs in a certain location of the battery cell 110, gases or flames produced from the battery cell 110 may be vented out of the battery module 10 through the specific venting holes H1 formed on top of the battery cell 110, thereby achieving smooth venting.

Referring to FIGs. 1 to 7, the battery module 10 according to an embodiment of the present disclosure may further include a protective layer 300. The protective layer 300 may be present on the outer surface of the module case 200.

The module case 200 may cover the two side surfaces, the upper surface and the lower surface of the cell stack 100 through the U-frame 210a and the top plate 220, or cover the two side surfaces, the upper surface and the lower surface of the cell stack 100 through the mono frame 210b. Additionally, the module case 200 may cover the front surface and the rear surface of the cell stack 100 through the end plate 230. As described above, the module case 200 may cover the total six surfaces of the cell stack 100, i.e., the two side surfaces, the upper surface, the lower surface, the front surface and the rear surface. The protective layer 300 may be present on at least one of the six surfaces of the module case 200. The protective layer 300 may be present on the outer surface of the module case 200.

The protective layer 300 may be configured to prevent thermal conduction and thermal radiation to the outside of the module case 200. To this end, the protective layer 300 may be made of a material having lower thermal conductivity than the module case 200. For example, the protective layer 300 may include at least one material of polyurethane or silicone. Additionally, the protective layer 300 may be a coating layer having UL 94 V-0 or higher rating, and may have flame retardancy. The protective layer 300 may have fire resistance performance.

The module case 200 may be made of a metal having high thermal conductivity, for example, aluminum. Because the metal has thermal conductivity, heat of high temperature gases or flames may spread to the adjacent battery module. However, by the above-described exemplary configuration of the present disclosure, because the protective layer 300 is present on the outer surface of the module case 200, it may be possible to prevent thermal conduction and thermal radiation to the outside of the module case 200. Accordingly, by the above-described exemplary configuration of the present disclosure, it may be possible to effectively prevent or delay thermal runaway propagation between battery modules, thereby ensuring safety and reliability of the battery module.

Additionally, by the above-described exemplary configuration of the present disclosure, it may be possible to prevent heat accumulation in the battery module due to gases or flames produced from the battery module in the event of thermal runaway in the battery module, thereby effectively preventing or delaying thermal runaway propagation in the battery module.

Specifically, referring to FIGs. 3, 4, 6 and 7, the protective layer 300 may be present on the upper surface of the module case 200 and the inner peripheral surface of the venting hole H1. For example, the protective layer 300 may be present on the upper surface of the top plate 220 or the mono frame 210b. Additionally, the protective layer 300 may be individually present for each of the plurality of venting holes H1.

There is a high likelihood of heat accumulation at the upper surface of the module case 200 having the venting hole H1 or thermal conduction to the outside of the module case 200 by high temperature gases or flames vented through the venting hole H1. However, by the above-described exemplary configuration of the present disclosure, because the protective layer 300 having fire resistance performance is present on not only the upper surface of the module case 200 having the venting hole H1 but also the inner peripheral surface of the venting hole H1, it may be possible to prevent thermal conduction when even a part of the metal of the module case 200 is exposed. Accordingly, by the above-described exemplary configuration of the present disclosure, it may be possible to prevent thermal conduction to the adjacent battery cell 110 or the adjacent venting hole H1 by high temperature gases or flames vented through the venting hole H1.

Additionally, referring to FIGs. 3, 4, 6 and 7, the protective layer 300 may be present on all the surfaces including the upper surface of the module case 200. For example, the protective layer 300 may be also present on the bottom surface of the module case 200. By the above-described exemplary configuration of the present disclosure, the battery pack including the battery module 10 may prevent heat propagation between the battery modules 10 irrespective of the placement structure or position of the battery modules 10, thereby improving heat propagation performance of the battery pack.

Meanwhile, the protective layer 300 may be a coating layer formed by direct foaming on the outer surface of the module case 200. By the above-described exemplary configuration of the present disclosure, it may be easier to cover the inner peripheral surface of the venting hole H1 than attaching a sheet-shaped fire resistance member separately provided in the module case 200. Additionally, it may be possible to omit the process of separately manufacturing the fire resistance member suited to the size of the outer surface of the module case 200, thereby reducing the cost and time in the manufacture of the battery module.

The protective layer 300 may be a layer of conformal coating along the outer surface of the module case 200. In particular, the protective layer 300 may be a foam layer of conformal coating. Here, conformal coating refers to a thin coating for preventing corrosion. The conformal coating material may include polyurethane or silicone as described above. These materials may be easily formed into a coating layer on the outer surface of the module case 200 of the assembled battery module 10 by a foam coating method.

Additionally, using the conformal coating method, the protective layer 300 may be coated with a uniform thickness along the curve of the outer surface of the module case 200. For example, the thickness of the protective layer 300 at the upper surface of the module case 200 and the thickness of the protective layer 300 at the inner peripheral surface of the venting hole H1 may be uniform.

By the above-described exemplary configuration of the present disclosure, it may be possible to reduce the drying time, leading to a shorter manufacturing time, and it may be easy to inspect the coating, leading to improved productivity. Additionally, it may be possible to achieve coating with uniform thickness along the curve of the outer surface of the module case 200, thereby preventing the direct exposure of the metal of even a part of the module case 200, and maintaining the thermal conduction and thermal radiation prevention effect all over the area of the module case 200.

Referring to FIGs. 4 and 7, the thickness t of the protective layer 300 may be 5% or more and 50% or less of the thickness T of the module case 200. For example, when the thickness T of the walls of the top plate 220 and the case body 210 is 2 mm, the thickness t of the protective layer 300 may be 0.1 mm or more and 1.0 mm or less. By the above-described exemplary configuration of the present disclosure, even though foam occurs in the protective layer 300 on the outer surface of the module case 200, the height of the battery module 10 does not greatly increase, and the volume of the battery module 10 does not increase, in turn, the energy density is not greatly affected.

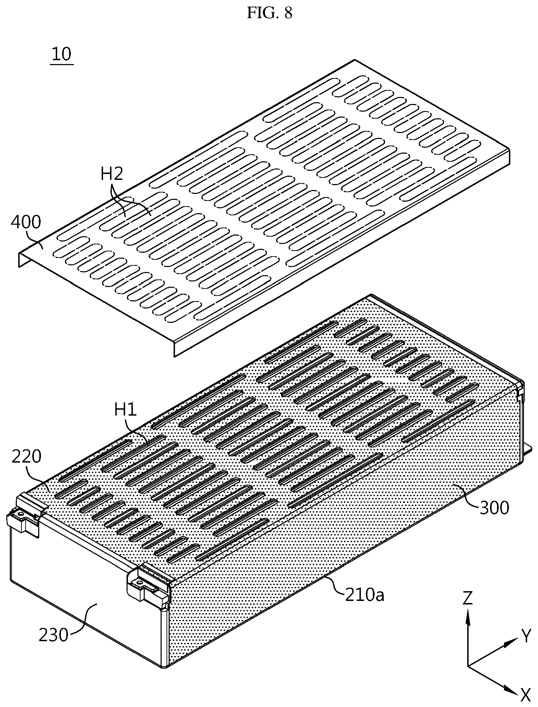

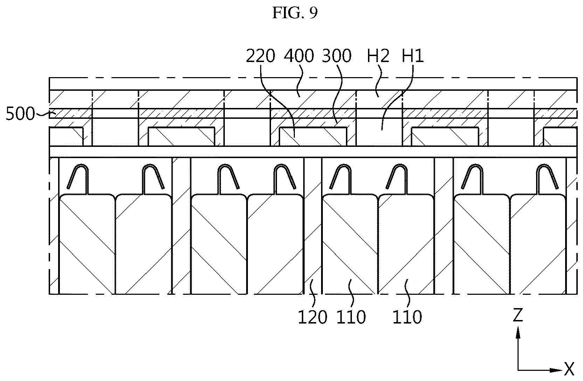

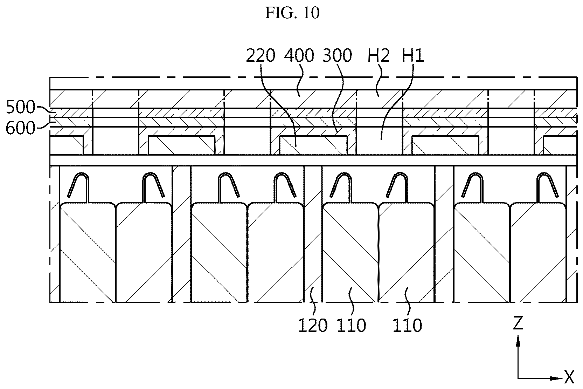

FIG. 8 is an exploded perspective view of a battery module according to still another embodiment of the present disclosure, FIG. 9 is a cross-sectional view of the battery module according to still another embodiment of the present disclosure, and FIG. 10 is a cross-sectional view of the battery module according to still another embodiment of the present disclosure.

Meanwhile, referring to FIGs. 8 to 10, the battery module 10 according to an embodiment of the present disclosure may further include a top cover 400.

The top cover 400 may be made of a material having high heat resistance and/or fire resistance performance, for example, mica, or may be formed of a pad including Fire Resistant Barrier (FRB) and silicone. The FRB may include inorganic materials that are easily transformable, and may be made of a material having very high flame retardancy and flammability performance.

Accordingly, it may be possible to prevent shrinkage and maintain stability in shape when high temperature heat is generated, thereby stably blocking high temperature gases or flames produced from the battery cell 110. Additionally, with the top cover 400, when a thermal event occurs in the battery module 10, it may be possible to prevent heat of high temperature gases or flames from transferring to the outside.

The top cover 400 may be coupled to one side of the module case 200. The top cover 400 may be configured to cover the upper surface of the module case 200. Specifically, the top cover 400 may be coupled to the upper surface of the top plate 220 or the mono frame 210b.

The top cover 400 may have a cover hole H2. The cover hole H2 may include a plurality of cover holes, and may be formed corresponding to the venting hole H1. That is, the cover hole H2 may be formed in the same shape and size as the venting hole H1 at a location at which the venting hole H1 is formed. The cover hole H2 may be separated from the module case 200 by the pressure of venting gases from the battery cell 110. Specifically, when gases are vented through the venting hole H1 corresponding to the cover hole H2, the top cover 400 may be only ruptured at the cover hole H2 disposed above the vented battery cell 110. To this end, a cut-out groove may be formed along the shape of the cover hole H2.

In other words, in a normal situation, the top cover 400 may cover all the venting holes H1 formed in the upper surface of the module case 200 to protect the cell stack 100 inside the module case 200. However, when a thermal event occurs in any battery cell 110, producing venting gases or flames, at least one of the cover holes H2 of the top cover 400 may be separated from the module case 200, to effectively force venting gases or flames straight out of the battery module 10 through the venting hole H1 without obstruction of the path. Additionally, the cover hole H2 remaining in the module case 200 may block heat as well as high temperature gases, flames and ejected materials produced from the battery cell 110.

By the above-described exemplary configuration of the present disclosure, because at least some of the cover holes H2 may be completely separated from the module case 200, the venting hole H1 may be exposed to the outside of the battery module 10 and gases or flames may be completely vented out of the battery module 10.

Because the module case 200 is made of a metal including aluminum, it may be difficult to couple the module case 200 to the top cover 400 made of mica. Accordingly, the battery module 10 according to another embodiment of the present disclosure may further include an adhesive member 500. The top cover 400 may be attached to the upper surface of the module case 200 by the adhesive member 500. The adhesive member 500 may include an adhesive, an adhesive tape. The entire area of the top cover 400 except the cover hole H2 may be attached to the upper surface of the module case 200 by the adhesive member 500.

Specifically, referring to FIG. 9, the protective layer 300 may be present on the upper surface of the module case 200, and the top cover 400 may be attached to the protective layer 300. That is, the top cover 400 may be attached to the protective layer 300 by the adhesive member 500. Accordingly, the module case 200/the protective layer 300/the adhesive member 500/the top cover 400 may be arranged in a sequential order from bottom. Compared to when the adhesive member 500 is directly formed on the module case 200 made of metal, when the adhesive member 500 is formed on the protective layer 300, matching performance between the protective layer 300 and the adhesive member 500 may be further improved.

In the event of thermal runaway in the battery module 10, the adhesive member 500 may melt by the pressure of gases from the battery cell 110 and/or high temperature heat of dust or flames, resulting in low adhesion strength between the module case 200 and the top cover 400. When the discharge pressure of venting gases is applied between the module case 200 and the top cover 400 adhered with low adhesion strength, the top cover 400 may be pushed in the discharge direction of venting gases and separated from the module case 200. In this instance, in case the top cover 400 remains unseparated from the module case 200 with low adhesion strength of the adhesive member, the path of venting gases or flames may be obstructed and venting gases or flames may go into the battery module 10 again through the interface having a gap between the top cover 400 and the module case 200.

In contrast, by the above-described exemplary configuration of the present disclosure, when adhering the top cover 400 to the module case 200, with the protective layer 300, the adhesion strength between the protective layer 300 and the adhesive member 500 may be improved, thereby preventing the top cover 400 from separating from the module case 200 by high temperature gases or flames when a thermal event occurs. Accordingly, it may be possible to prevent the vented gases or flames from going into the battery module 10 again. Accordingly, it may be possible to ensure safety and reliability of the battery module 10.

Referring to FIG. 10, the battery module 10 according to still another embodiment of the present disclosure may further include a primer layer 600. The primer layer 600 may be made of a specially processed material to perform a primer function. The primer layer 600 may be applied to the protective layer 300 to improve the adhesion strength of the adhesive member 500. That is, the primer layer 600 may be interposed between the protective layer 300 and the adhesive member 500, and the module case 200/the protective layer 300/the primer layer 600/the adhesive member 500/the top cover 400 may be arranged in a sequential order from bottom.

By the above-described exemplary configuration of the present disclosure, the protective layer 300 may act as a base layer for forming the primer layer 600, making it easy to form the primer layer 600. Additionally, the protective layer 300 may have high matching performance with the primer layer 600, helping to prevent the primer layer 600 from separating and hold the primer layer 600. Accordingly, the protective layer 300 may have undergone special treatment to further improve the coupling strength between the module case 200 and the top cover 400.

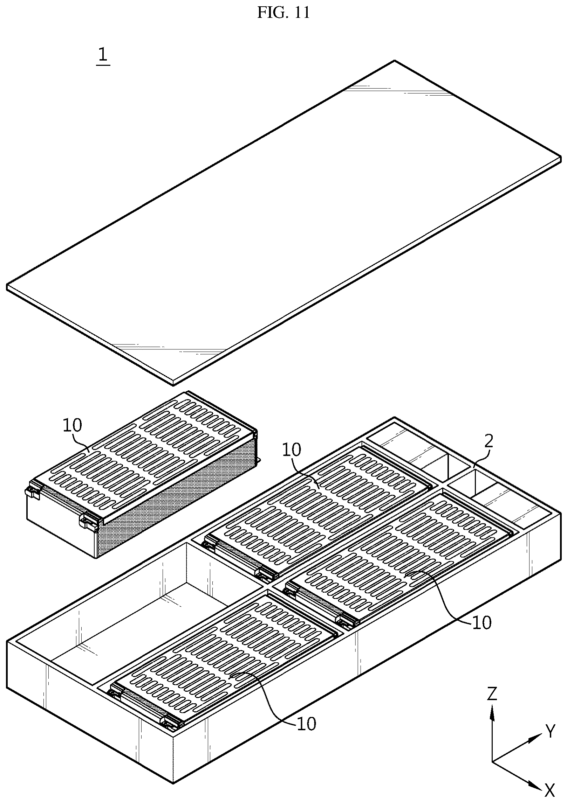

FIG. 11 is a schematic perspective view of a battery pack including the battery module according to an embodiment of the present disclosure.

Referring to FIG. 11, the battery pack 1 according to an embodiment of the present disclosure may include at least one battery module 10 according to an embodiment of the present disclosure as described above. The battery pack 1 according to the present disclosure may further include a pack case 2 accommodating a Battery Management System (BMS) for controlling the charge/discharge of at least one battery module 10, a current sensor and a fuse and the above-described components. A cooling member may be present on the bottom surface of the pack case 2 to cool the battery module 10. In this case, the protective layer 300 may be formed on the two side surfaces and the upper surface of the module case 200 except the bottom surface. Accordingly, the bottom surface without the protective layer 300 may cool the battery modules 10 directly and quickly through thermal contact between the cooling member and the battery module 10, and thermal conduction and thermal radiation may be prevented through the protective layer 300 formed on the remaining surface of the module case 200.

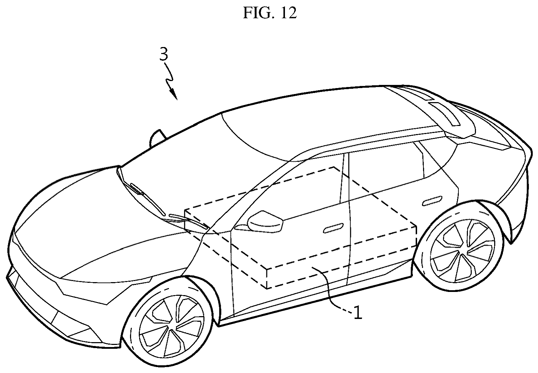

FIG. 12 is a schematic perspective view of a vehicle including the battery pack according to an embodiment of the present disclosure.

Referring to FIG. 12, the vehicle 3 according to an embodiment of the present disclosure may include at least one battery pack 1 according to an embodiment of the present disclosure or at least one battery module 10 according to an embodiment of the present disclosure. The vehicle 3 according to the present disclosure may include, for example, an electric vehicle, a hybrid electric vehicle or a plug-in hybrid electric vehicle. The vehicle 3 includes a four-wheeled vehicle and a two-wheeled vehicle. The vehicle 3 operates using power supplied from the battery pack 1 or the battery module 10 according to an embodiment of the present disclosure.

While the present disclosure has been hereinabove described by a limited number of embodiments and drawings, the present disclosure is not limited thereto, and it is obvious to persons having ordinary skill in the technical field pertaining to the present disclosure that a variety of modifications and change may be made within the technical aspect of the present disclosure and the appended claims and their equivalent scope.

## Claims

1. A battery module comprising:
a cell stack including a plurality of battery cells;
a module case configured to accommodate the cell stack; and
a protective layer disposed on an outer surface of the module case and configured to prevent thermal conduction and thermal radiation to an outside of the module case.

2. The battery module according to claim 1, wherein the module case has at least one venting hole in an upper surface, wherein gas from the battery cell is vented through the venting hole, and
wherein the protective layer is present on the upper surface of the module case and an inner peripheral surface of the venting hole.

3. The battery module according to claim 2, wherein the venting hole includes a plurality of venting holes, and
wherein the protective layer is individually present for each of the plurality of venting holes.

4. The battery module according to claim 2, wherein the protective layer is present on all surfaces including the upper surface of the module case.

5. The battery module according to claim 1, wherein the protective layer is made of a material including at least one of polyurethane or silicone.

6. The battery module according to claim 1, wherein the protective layer is a coating layer of UL 94 V-0 or higher rating.

7. The battery module according to claim 1, wherein the protective layer is a foam layer of conformal coating along the outer surface of the module case.

8. The battery module according to claim 1, wherein a thickness of the protective layer is 5% or more or 50% or less of a thickness of the module case.

9. The battery module according to claim 1, further comprising:
a top cover attached to an upper surface of the module case by an adhesive member.

10. The battery module according to claim 9, wherein the top cover is attached to the protective layer by the adhesive member.

11. The battery module according to claim 10, further comprising:
a primer layer disposed between the protective layer and the adhesive member to improve a coupling strength between the module case and the top cover.

12. The battery module according to claim 1, wherein the module case includes:
a U-frame having an open upper surface, an open front surface and an open rear surface, and configured to accommodate the cell stack, and
a top plate covering the open upper surface of the U-frame.

13. The battery module according to claim 1, wherein the module case includes a mono frame having an open front surface and an open rear surface and configured to accommodate the cell stack.

14. A battery pack comprising the battery module according to any one of claims 1 to 13.

15. The battery pack according to claim 14, further comprising:
a pack case accommodating the battery module and having a cooling member on a bottom surface,
wherein the protective layer is present on the two side surfaces and the upper surface of the module case.

16. A vehicle comprising the battery pack according to claim 14.
